Europäisches Patentamt

European Patent Office

Office européen des brevets

(19)

(11) Veröffentlichungsnummer: **0 026 844**
**A2**

## (12) EUROPÄISCHE PATENTANMELDUNG

(21) Anmeldenummer: 80105241.6

(22) Anmeldetag: 03.09.80

(51) Int. Cl.³: **F 16 L 58/06,** B 05 D 7/14,
B 28 B 19/00

(30) Priorität: 04.10.79 DE 2940213
04.10.79 DE 2940214

(43) Veröffentlichungstag der Anmeldung: 15.04.81
Patentblatt 81/15

(84) Benannte Vertragsstaaten: **AT CH DE FR GB IT LI SE**

(71) Anmelder: **Buderus Aktiengesellschaft,**
**Sophienstrasse 32-34, D-6330 Wetzlar (DE)**

(72) Erfinder: **Reeh, Kurt, Dr., Lerchenweg 8,**
**D-6301 Wettenberg 1 (DE)**
Erfinder: **Jerofke, Hans-Christopf, Am Feldkreuz 2,**
**D-6330 Wetzlar (DE)**
Erfinder: **Kramer, Friedrich, Am Feldkreuz 10,**
**D-6330 Wetzlar (DE)**

(74) Vertreter: **Benner, Alwin, Dipl.-Ing., Buderus**
**Aktiengesellschaft ZA-Patentabteilung Postfach 1220,**
**D-6330 Wetzlar (DE)**

(54) **Verfahren zum Herstellen einer Umhüllung auf Rohren aus Metall und mit einer solchen Umhüllung versehenes Rohr, insbesondere Muffenrohr.**

(57) Umhüllungen 3 auf Rohren 1 aus Metall auf der Basis einer Zementmörtel- bzw. Faser-Zement-Mischung stellen einen wirkungsvollen Schutz gegen Korrosionen dar. Geringe Zerstörungen der Umhüllung 1 können in Verbindung mit einem Elektrolyten zu einer Makroelementbildung und zu einem Abtrag an der Rohroberfläche führen. Um eine solche Makroelementbildung zu verhindern und um ein gutes Haften der Umhüllung 3 auf dem Rohr 1 zu bewirken, wird auf die Außenfläche des Rohres 1 zunächst eine unter Feuchtigkeit aushärtende Schutzhaut 2 einer Versiegelungsmasse aufgetragen und diese vor dem Aushärten mit der Umhüllung 3 umgeben.

ACTORUM AG

BUDERUS AKTIENGESELLSCHAFT
TP/F/St/EP 1392/1393          - 1 -


Verfahren zum Herstellen einer Umhüllung auf Rohren
aus Metall und mit einer solchen Umhüllung versehenes
Rohr, insbesondere Muffenrohr

Die Erfindung betrifft ein Verfahren zum Herstellen
einer Umhüllung auf Rohren aus Metall nach dem Oberbegriff des Patentanspruches und ein mit einer
solchen Umhüllung versehenes Rohr, insbesondere ein
Muffenrohr.

Ein Verfahren dieser Art und ein entsprechendes Rohr
ist in der DE-OS 27 43 259 beschrieben und dargestellt. Auf die Außenfläche des Rohres wird gemäß
diesem bekannten Stand der Technik eine Zementmörtel-
bzw. Faser-Zement-Mischung als Korrosionsschutz aufgetragen. Zum Stabilisieren und Verdichten der Umhüllung wird diese unmittelbar nach dem Auftragen
mit einer Bandage umwickelt. Eine Außenhaut bewirkt
zusätzlich ein besseres Abbinden des Zementmörtels
und einen Schutz gegen zementspezifische aggressive
Medien.

- 2 -

Das an sich bekannte Problem der Makroelementbildung wurde bei umhüllten Rohren näher untersucht. Kenntnisstand der Korrosionstechnik ist nämlich, daß die gesamte umhüllte Rohroberfläche als Kathode und jede unbedeckte Fläche als Anode wirkt. In Verbindung mit einem Elektrolyten, z.B. dem Erdboden, entsteht ein Stromfluß und somit ein Abtrag der Anodenfläche. Während man bisher die Eigenkorrosion an unbedeckten Flächen als wesentliche Fehlerquelle ansah, kommt bei den umhüllten Rohren der Korrosionsangriff infolge der Makroelementbildung hinzu. Dieser Korrosionsangriff überschreitet bei weitem die Schäden durch Eigenkorrosion. Es muß deshalb auf alle Fälle verhindert werden, daß sich bei umhüllten Rohren unbedeckte Metallflächen bilden, die als Anode gegenüber der relativ großen Kathode wirken und eine Korrosion infolge des Stromflusses zur Folge haben können.

Bei dem Rohr mit einer Zementmörtel- bzw. Faser-Zement-Umhüllung nach dem Stand der Technik sollte durch zwei Maßnahmen das Entstehen von Fehlstellen verhindert werden. Zunächst durch ein einwandfreies Anliegen der Umhüllung am Rohr unter Mithilfe einer Bandage, einer ensprechenden Faserzugabe oder einer speziellen Zementaufbereitung. Ferner durch einen geschlossenen Überzug als Abschirmung gegen aggressive Medien.

Trotz dieser sehr guten Beschichtung ist aber keine feste Haftung des Mörtels auf der Rohraußenfläche vorhanden. Es wird nur eine Stabilisierung des Mörtels und kein direkter Verbund mit dem Rohr erzielt. Da die geschlossene Außenhaut durch mechanische Einwirkungen beim Transport und an der Baustelle beschädigt werden kann, ist deshalb die gefährliche Makroelementbildung nicht völlig ausgeschlossen.

Es wird ein Verfahren zum Herstellen einer Umhüllung auf Rohren aus Metall vorgeschlagen, bei dem ein Verbund zwischen der Rohraußenfläche und der Mörtelmischung erzielt wird und bei dem eine vor mechanischen Einflüssen geschützte Schutzhaut entsteht.

Gemäß der Erfindung wird dieses durch die im Kennzeichen des Patentanspruches 1 beschriebenen Verfahrensschritte erreicht.

Die Schutzhaut wird nicht mehr über, sondern unter die Mörtelmischung gelegt, wodurch sie gegen mechanische Beschädigungen geschützt ist. Da sie aus einer auf dem Rohr haftenden Masse besteht, die noch vor dem Aushärten mit dem Mörtel umhüllt wird, stellt sie ein Haftmittel zwischen der Rohraußenfläche und der äußeren Umhüllung dar. Es entsteht ein inniger Verbund, welcher ein Ablösen der Umhüllung vom Rohr ausschließt. Dieses Ergebnis wurde durch praktische Versuche bestätigt.

Nach der DE-PS 555 130 ist es u.a. bekannt, eine Schutzhaut auf das Rohr aufzutragen und anschließend eine äußere Umhüllung aufzubringen. Es handelt sich aber nicht um eine Mörtel-Umhüllung und auch nicht um eine haftende Schutzhaut. Die Mängel sind in Spalte 2 ab Zeile 43 dieser Schrift genannt, nämlich ein leicht abbröckelnder Rostschutz weil die aufgetragene Asphaltschicht nicht genügend Verbindung mit dem Rohr bzw. mit der darunterliegenden Isolierschicht aufweist.

Gemäß der US-PS 1 979 656 ist es bekannt, vor dem Auftragen des Mörtels eine Grundschicht auf das Rohr aufzutragen. Die Grundschicht besteht dort aus Flüssigmörtel (grout) und bildet weder eine geschlossene Haut noch einen ausgeprägten Verbund. Die erfindungsgemäße Verwendung eines Kunststoffes etwa auf der Basis eines Zweikompomenten-Flüssig-Epoxyd-Harzes, das unter Feuchtigkeit aushärtet und mit Zement verträglich ist, führt hingegen zu einer Versiegelung des Rohres bei hoher Haftwirkung. Als weitere Vorzüge dieses Kunststoffes ist sein hoher Diffusionswiderstand und eine gute korrosionschemische Beständigkeit zu nennen.

Es empfiehlt sich, eine Schutzhaut auf der unbearbeiteten Rohraußenfläche in einer Schichtdicke von etwa 100 $\mu$m und auf dieser eine Zementmörtel- bzw. Faser-Zement-Schicht zwischen 5 und 10 mm Stärke aufzubringen. Die Schichtdicke der Schutzhaut kann je nach Umständen auch dicker ausfallen, um eine stärkere Wirkung zu erzielen. Besonders zweckmäßig ist es, den Zement mit einer weiteren Bitumenschicht zu umhüllen, welche einen direkten Angriff auf den Mörtel verhindert und das Abbinden verbessert.

Rohre, für welche das erfindungsgemäße Verfahren und die so erstellte Umhüllung Verwendung finden, sind vor allem sogenannte Muffenrohre mit einer Muffe, einem Rohrschaft und einem Spitzende. Der Verbindungsbereich von zwei Muffenrohren dieser Art ist in dem DE-GM 78 33 142 beschrieben und dargestellt.

Bei diesen Muffenrohren stellt das in die benachbarte Muffe einzufügende Spitzende eine besondere Schwachstelle dar, weil in diesem Bereich das unbeschichtete Metall Korrosionsangriffen ausgesetzt ist. Die Zerstörung kann durch Eigenkorrosion erfolgen. Hinzu kommt ein Korrosionsangriff infolge einer Makroelementbildung. Die beschichteten Rohrteile wirken nämlich als Kathode und die nicht beschichteten Teile als Anode. Bei Vorhandensein eines Elektrolyten, entsteht ein Stromfluß, der zum Abtrag des Anodenbereiches führt.

Gemäß dem DE-GM 78 33 142 wird der gefährdete Bereich von einer Isoliermanschette überdeckt. Hierzu ist ein gesondertes Teil nötig, das separat aufgezogen werden muß, um den beabsichtigten Effekt zu erzielen.

Um eine ausreichende Isolierung unter Vermeidung eines separaten Teiles zu erzielen, besitzt das Spitzende des Rohres gemäß einem besonderen Kennzeichen der Erfindung einen geringeren Außendurchmesser als der benachbarte Rohrschaft, wobei auf der Außenfläche des Rohrschaftes eine die Durchmesserverringerung ausgleichende Schutzhaut aufgebracht ist.

Grundsätzlich empfiehlt es sich, die gesamte Rohroberfläche mit der Schutzhaut zu versehen, u. zw. im Bereich unter dem Korrosionsschutzüberzug mit einer entsprechend verringerten Schichtdicke von beispielsweise 100 $\mu$m. Bei einer Durchmesserverringerung des Spitzendes von etwa 0,5 mm ergibt sich dort dann eine Schichtdicke der Schutzhaut von etwa 300 bis 500 $\mu$m.

Die ebenfalls gefährdeten, nicht mit dem Korrosionsschutzüberzug versehenen Stirnflächen des Kernrohres sollten auch mit der Schutzhaut überzogen sein.

Ein besonderes Problem entsteht dann, wenn an der Baustelle Rohre gekürzt werden. Hier fällt das freie Spitzende weg. Eine Entfernung des Korrosionsschutzüberzuges ist wegen der sehr starken Haftung zwischen der Schutzhaut aus Epoxyd-Harz und dem Mörtel sowie wegen des dann fehlenden Korrosionsschutz am neu entstehenden Einschubende nicht zu empfehlen. Statt dessen kann ein Sonderformstück eingesetzt werden, dessen Einschubende dem Spitzende des erfindungsgemäßen Rohres entspricht und dessen Muffe soweit aufgeweitet ist, daß sie über den Korrosionsüberzug greift.

Die beigefügte Zeichnung stellt Ausführungsbeispiele der Erfindung dar.

Es zeigt:

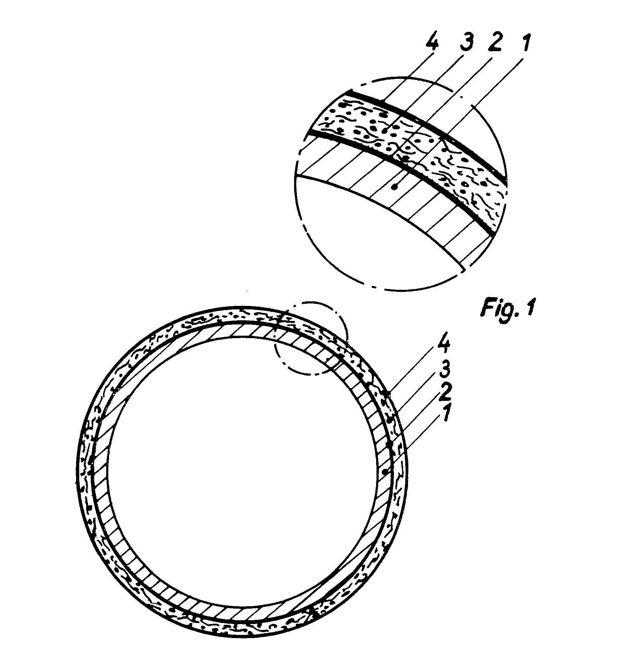

Fig. 1: Einen Querschnitt durch ein nach dem Verfahren umhülltes Rohr mit einem vergrößerten Auszug.

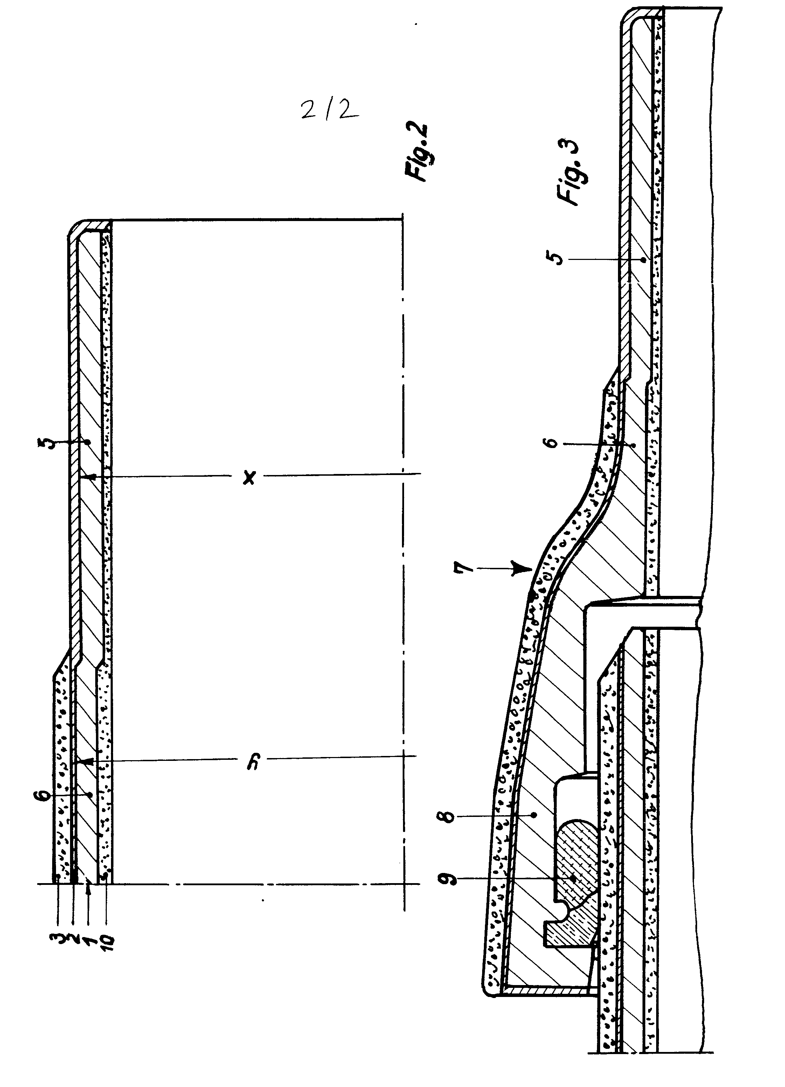

Fig. 2: Das Spitzende eines Muffenrohres im teilweisen Längsschnitt und

Fig. 3: Den Verbindungsbereich eines Formstückes mit einem abgeschnittenen Rohr im teilweisen Längsschnitt.

Das Rohr 1 aus Gußeisen oder Stahl ist außen mit einer geschlossenen Schutzhaut 2 aus einer Spezial-versiegelungsmasse sowie mit einer korrosions-

hindernden Umhüllung 3 versehen. Eine innere Schutzmasse 10 schützt das Rohr 1 gegen Innenkorrosionen, während eine Außenhaut 4 auf Bitumenbasis einer Zerstörung des Korrosionsschutzüberzuges entgegenwirkt.

Der Durchmesser x des Spitzendes 5 ist etwas geringer als der Durchmesser y des Rohrschaftes 6, was sich z.B. im Schleudergußverfahren ohne weiteres herstellen läßt. Infolge dieser Verengung kann die Schutzhaut 2 am Spitzende 5 dicker aufgetragen werden als im Bereich des zusätzlich durch die Umhüllung 3 geschützten Rohrschaftes 6. Ein Materialauftrag, der eine Änderung des Muffeninnendurchmessers erforderlich machen würde, wird vermieden.

Ein Spezialformstück 7 besitzt eine Muffe 8 mit einem derart aufgeweiteten Muffeninnendurchmesser, daß auch ein vollständig beschichtetes Rohr übergriffen wird. Ein Dichtring 9 setzt sich dabei auf die Umhüllung 3 des Nachbarrohres auf. Das Formstück ist zur Verbindung von abgeschnittenen Rohren geeignet, wobei ein weiteres Rohr in vorbeschriebener Weise auf das Spitzende 5 welches dem Spitzende eines Rohres gleicht, aufgeschoben wird.

### Patentansprüche

1. Verfahren zum Herstellen einer Umhüllung (3) auf
Rohren (1) aus Metall durch Auftragen einer Zementmörtel- bzw. Faser-Zement-Mischung, dadurch gekennzeichnet, daß auf die zu umhüllende Außenfläche des Rohres (1)
eine unter Feuchtigkeit aushärtende, eine Schutzhaut (2)
bildende Versiegelungsmasse, vorzugsweise ein Zweikomponenten-Flüssig-Epoxyd-Harz aufgetragen wird und daß
die Zementmörtel- bzw. Faser-Zement-Mischung unmittelbar anschließend auf die noch nicht ausgehärtete Versiegelungsmasse (2) aufgegeben wird.

2. Mit einer Umhüllung nach Anspruch 1, versehenes Rohr (1),
gekennzeichnet durch eine unmittelbar auf der Außenfläche des Rohres (1) aufliegende Schutzhaut (2) aus
einer Versiegelungsmasse, vorzugsweise eines Zweikomponenten-Flüssig-Epoxyd-Harzes und durch eine diese Schutzhaut (2) umgebende Umhüllung (3) einer Zementmörtel-
bzw. Faser-Zement-Mischung.

3. Rohr nach Anspruch 2 bestehend aus einer Muffe (8),
einem Rohrschaft (6) und einem Spitzende (5), dadurch
gekennzeichnet, daß die Schutzhaut (2) die gesamte Außenfläche des Rohres (1) nämlich der Muffe (8) des Rohrschaftes (6) und des Spitzendes (5), die Umhüllung (3)
hingegen nur die Bereiche der Muffe (8) und des Rohrschaftes (6) überdeckt.

4. Muffenrohr nach Anspruch 3, dadurch gekennzeichnet, daß das Spitzende (5) des Rohres (1) einen geringeren Außendurchmesser besitzt als der benachbarte Rohrschaft (6) und daß auf der Außenfläche des Rohres (1) eine die Durchmesserverringerung ausgleichende Schutzhaut (2) aufgebracht ist.

5. Muffenrohr nach Anspruch 4, dadurch gekennzeichnet, daß die Schichtdicke der Schutzhaut (2) im Bereich des Spitzendes (5) etwa 300 - 500 $\mu$m und auf der übrigen Rohraußenfläche, nämlich der Muffe (8) und dem Rohrschaft (6) etwa 100 $\mu$m beträgt.

6. Muffenrohr nach den Ansprüchen 3 bis 5, dadurch gekennzeichnet, daß auch die Stirnflächen des Rohres (1) mit der Schutzhaut (2) überzogen sind.

0026844

1/2

4 3 2 1

Fig. 1

4
3
2
1

2/2

Fig.2

Fig.3